# EUROPÄISCHE PATENTSCHRIFT

(11) **EP 2 349 801 B1**
(45) Veröffentlichungstag und Bekanntmachung des Hinweises auf die Patenterteilung: **01.02.2017**
(21) Anmeldenummer: 09783433.7
(22) Anmeldetag: 25.09.2009
(51) Int. Cl.: B60W 20/00, B60K 6/48, B60W 30/18, B60W 10/02, B60W 10/06, B60W 10/08, B60K 1/02

(54) **VERFAHREN UND VORRICHTUNG ZUM ANFAHREN EINES HYBRIDFAHRZEUGES**
METHOD AND DEVICE FOR STARTING A HYBRID VEHICLE
PROCÉDÉ ET DISPOSITIF POUR LE DÉMARRAGE D'UN VÉHICULE HYBRIDE

(30) Priorität: 24.10.2008 DE 102008043159
(43) Veröffentlichungstag der Anmeldung: 03.08.2011
(73) Patentinhaber: Robert Bosch GmbH, 70442 Stuttgart (DE)
(72) Erfinder: FALKENSTEIN, Jens-Werner, 73434 Aalen (DE)
(86) Internationale Anmeldenummer: PCT/EP2009/062459
(87) Internationale Veröffentlichungsnummer: WO 2010/046198

(56) Entgegenhaltungen:
- EP-A2- 1 529 672
- DE-A1- 10 225 249
- DE-A1-102006 048 358
- US-A- 4 335 429
- US-A1- 2004 009 842

## Beschreibung

### Stand der Technik

Verfahren zum Anfahren eines Hybridfahrzeuges, welches ein erstes und ein zweites Antriebsaggregat aufweist, wobei das Anfahrsolldrehmoment von dem zweiten Antriebsaggregat erzeugt wird sowie einer Vorrichtung zur Durchführung des Verfahrens.

Bei konventionellen Kraftfahrzeugantrieben erfolgt ein Anfahrvorgang meist über eine schleifende Anfahrkupplung, welche vom Fahrer über das Kupplungspedal betätigt wird. Bei automatisierten Getrieben wird ein von der Steuerung betätigter Aktor eingesetzt.

Fahrzeuge mit einer hybriden Antriebsstruktur weisen meistens einen Verbrennungsmotor als erstes Antriebsaggregat und als zweites Antriebsaggregat einen Elektromotor oder einen Hydraulikmotor auf. Auch weitere zusätzliche Antriebsaggregate sind möglich. So kann das Drehmoment während des Anfahrbetriebes des Hybridfahrzeuges von den Antriebsaggregaten aufgebracht werden.

Aus der gattungsgemäßen DE 195 03 500 A1 ist ein Parallelhybridantrieb für ein Kraftfahrzeug bekannt, welcher sowohl einen Verbrennungsmotor als auch eine elektrische Maschine als Antrieb aufweist. Beim Antrieb des Fahrzeuges in Vorwärtsfahrtrichtung oder/und in Rückwärtsfahrtrichtung wird das Antriebsmoment ausschließlich von der elektrischen Maschine erzeugt.

Aus der DE 10 2006 048 358 A1 ist ein Verfahren zum Steuern eines Hybridantriebes bekannt, wobei ein Verbrennungsmotor durch das Schließen einer Anfahrkupplung gestartet wird. Dazu wird die Kupplung auf ein definiertes Schlupfmoment gesteuert. Mit diesem Schlupfmoment wird der Verbrennungsmotor beschleunigt. Das hierzu während der Schlupfphase notwendige Drehmoment wird durch eine elektrische Maschine bereitgestellt, welches an der elektrischen Maschine als Reserve vorgehalten werden muss.

Das Dokument US2004/0009842 A1 offenbart ein Verfahren gemäß dem Oberbegriff des Anspruchs 1 und ein Vorrichtung gemäß dem Oberbegriff des Anspruchs 13.

Das erfindungsgemäße Verfahren zum Anfahren eines Hybridfahrzeuges mit den Merkmalen des Anspruchs 1 weist den Vorteil auf, dass das zweite Antriebsaggregat das Hybridfahrzeug verschleißfrei antreibt. Dadurch, dass eine Anfahrkupplung zur Kopplung des ersten Antriebsaggregates an den Antriebsstrang nur dann in den schlupfenden Zustand gebracht wird, wenn ein vorgegebenes Solldrehmoment des zweiten Antriebsaggregates überschritten wird, wird der schlupfende Zustand der Anfahrkupplung zur Vermeidung der dabei auftretenden Temperaturerhöhungen nur kurzzeitig genutzt. Die Ansteuerung der Anfahrkupplung sowie des zweiten Antriebsaggregats werden somit miteinander koordiniert.

Der Kupplungsverschleiß der Anfahrkupplung, welcher durch den schlupfenden Zustand der Kupplung hervorgerufen wird, wird reduziert. Daneben wird eine Beeinträchtigung des Öls von im Ölbad laufenden Kupplungen infolge von Scherkräften und Temperaturspitzen unterbunden.

Erfindungsgemäß wird ein Anfahrsolldrehmoment des Hybridfahrzeuges auf das zweite Antriebaggregat übertragen, welches auf ein Maximaldrehmoment begrenzt ist. Da das Anfahrsolldrehmoment des Hybridfahrzeuges grundsätzlich von dem ersten und dem zweiten Antriebsaggregat gemeinsam erzeugt werden soll, wird bei Überschreitung des Maximaldrehmomentes des zweiten Antriebsaggregats das erste Antriebsaggregat zum Anfahrbetrieb des Hybridfahrzeuges zugeschaltet, insbesondere mittels der Anfahrkupplung an den Antriebsstrang angekoppelt.

Erfindungsgemäß wird eine Drehmomentreserve am ersten Antriebsaggregat angefordert, wenn sich das Anfahrsolldrehmoment erhöht, aber bevor das Anfahrsolldrehmoment das Maximaldrehmoment des zweiten Antriebsaggregates überschreitet. Die Drehmomentreserve wird also angefordert, bevor die Anfahrkupplung in den schlupfenden Zustand gelangt und das Drehmoment am ersten Antriebsaggregat abnimmt. Zu einem späteren Zeitpunkt, zu welchem die Anfahrkupplung dann in den schlupfenden Zustand gelangt ist, hat sich die Drehmomentreserve bereits aufgebaut.

Das Maximaldrehmoment des zweiten Antriebsaggregates hängt dabei von dem aktuellen Betriebszustand der Aggregate des Antriebsstranges des Hybridfahrzeuges ab. Der aktuelle Betriebszustand wird von den Grenzen des zweiten Antriebsaggregates, dem Zustand eines Energiespeichers, vom aktuellen Zustand des ersten Antriebsaggregates und/oder zusätzlichen Antriebsaggregaten und/oder von den Straßenverhältnissen beeinflusst, auf welchen sich das Hybridfahrzeug bewegt und welche auf den gesamten Antrieb, wie beispielsweise über die Antischlupfregelung, zurückwirken.

In einer Weiterbildung wird ein von der schlupfenden Anfahrkupplung zu übertragendes Kupplungsdrehmoment aus der Differenz des Anfahrsolldrehmomentes des Hybridfahrzeuges und des Maximaldrehmomentes des zweiten Antriebsaggregates gebildet, wenn das Anfahrsolldrehmoment das Maximaldrehmoment des zweiten Antriebsaggregates übersteigt. Nur in diesem Fall wird die Anfahrkupplung in den schlupfenden Zustand gebracht. In diesem Moment liefern das erste und das zweite Antriebsaggregat gemeinsam einen Beitrag zum Anfahren des Hybridfahrzeuges.

Das Kupplungsdrehmoment wird in Abhängigkeit des aktuellen Betriebszustandes der Anfahrkupplung und /oder der Antriebsaggregate und/oder von den Straßenverhältnissen auf ein Kupplungsmaximaldrehmoment begrenzt. Diese Begrenzung dient dem Schutz der Kupplung, um beispielsweise die Kupplung durch eine zu hohe Temperatur nicht zu überlasten. Weiterhin ist das Kupplungsmaximaldrehmoment von einem Verbrennungsmotormaximaldrehmoment abhängig, wenn beispielsweise das erste Antriebsaggregat als Verbrennungsmotor ausgebildet ist. Besonders nach den ersten Zündungen nach dem Start wird dieses Verbrennungsmotormaximaldrehmoment reduziert.

Darüber hinaus ist das Kupplungsmaximaldrehmoment auch von dem aktuellen Zustand des gesamten Antriebes abhängig.

Vorteilhafterweise liegt zur Einstellung einer Drehmomenterhöhung das Anfahrsolldrehmoment über dem Kupplungsmaximaldrehmoment. Bei einer solchen Drehmomenterhöhung wird ein größeres Drehmoment an die Räder ausgegeben, als sie von dem ersten Antriebsaggregat erzeugt wird.

Insbesondere beim Anfahren des Fahrzeuges am Berg oder beim Fahren eines Fahrzeuges mit einem Anhänger weist eine solche Drehmomenterhöhung, die der Wandlererhöhung eines Drehmomentwandlers eines Automatikgetriebes nachgebildet ist und zu einem erhöhten Getriebeeingangsmoment führt, einen wesentlichen Vorteil gegenüber einer schlupfenden Anfahrkupplung auf, da eine mechanische Belastung der Anfahrkupplung reduziert werden kann. Hiermit werden auf einfache Weise komfortable Kriech- und Anfahrvorgänge des Hybridfahrzeuges ermöglicht. Die Kupplung kann kleiner dimensioniert werden, was Kostenvorteile bringt.

In einer anderen Ausgestaltung ist ein drittes Antriebsaggregat mit dem ersten Antriebsaggregat gekoppelt und wird von diesem angetrieben, um Energie zu erzeugen, welche das zweite Antriebsaggregat nutzt. Bei dem Einsatz eines dritten Antriebsaggregates werden das Maximalmoment des zweiten Antriebsaggregates und das durch die Kupplung abnehmbare Kupplungsmaximalmoment ebenfalls vom Betriebszustand dieses dritten Antriebaggregates zum Beispiel in Form der von ihm abgegebenen Generatorleistung beeinflusst.

Das von der schlupfenden Kupplung zu übertragende Kupplungsmoment beeinflusst das erste Antriebsaggregat. Um die Beeinflussung gering zu halten, wird das von der schlupfenden Kupplung zu übertragende Kupplungsmoment an dem ersten Antriebsaggregat vorgesteuert. Dies hat den Vorteil, dass ein Leerlaufregler oder ein Anfahrregler entlastet werden und ein Drehzahleinbruch bei Übergängen zwischen offener und schlupfender Kupplung vermieden wird. Falls ein drittes Antriebsaggregat mit dem ersten Antriebsaggregat gekoppelt ist, wird dieses auch vom Kupplungsmoment beeinflusst. Das Kupplungsmoment kann auch vollständig an dem dritten Antriebsaggregat vorgesteuert werden oder es wird auf das erste und das dritte Antriebsaggregat aufgeteilt. Dabei müssen mechanische Übersetzungen zwischen dem ersten und dem dritten Antriebsaggregat berücksichtigt werden. Ein Leerlaufregler oder ein Anfahrregler kann dabei auf das erste und/oder das dritte Antriebsaggregat wirken.

Vorteilhafterweise werden bei Erreichen einer Drehzahlgleichheit von Eingangsdrehzahl und Ausgangsdrehzahl der Anfahrkupplung, bei der die Anfahrkupplung vom schlupfenden Zustand in den geschlossenen Zustand übergeht, die Drehmomente des ersten und des zweiten und/oder dritten Antriebsaggregates sprungfrei dem Fahrbetrieb des Hybridfahrzeuges angepasst. Dabei wird im Fahrbetrieb das Antriebsmoment hauptsächlich von dem ersten Antriebsaggregat wahrgenommen. Das Drehmoment des zweiten Antriebsaggregates wird dabei beispielsweise rampenförmig zurück genommen, während das Drehmoment des ersten Antriebsaggregates rampenförmig erhöht wird, um mechanische Auswirkungen auf das Hybridfahrzeug bei der Anpassung zu vermeiden.

Eine besonders effiziente Variante des erfindungsgemäßen Verfahrens wird erzielt, wenn das erste Antriebsaggregat als Verbrennungsmotor und das zweite und dritte Antriebsaggregat jeweils als ein Elektromotor ausgebildet sind.

Vorteilhafterweise erfolgt ein Anfahren durch das zweite Antriebsaggregat bei geöffneter Anfahrkupplung, während das erste Antriebsaggregat abgeschaltet ist. Ein Start des ersten Antriebsaggregates erfolgt, wenn sich das Anfahrsolldrehmoment erhöht, aber bevor das Anfahrsolldrehmoment das Maximaldrehmoment des zweiten Antriebsaggregates überschreitet. Somit wird die Zeit überbrückt, bis ein Istdrehmoment des ersten Antriebsaggregates zur Verfügung steht.

Um die Drehmomentreserve rechtzeitig anzufordern, wird ein Abstand des Anfahrsolldrehmoments zum Maximaldrehmoment des zweiten Antriebsaggregates in Abhängigkeit von einer Betätigungsgeschwindigkeit eines Fahrpedals bestimmt.

Eine andere Weiterbildung der Erfindung betrifft eine Vorrichtung zum Anfahren eines Hybridfahrzeuges, welches ein erstes und ein zweites Antriebsaggregat aufweist, wobei das Anfahrdrehmoment von dem zweiten Antriebsaggregat erzeugt wird. Um die Anfahrkupplung während des Anfahrvorganges so weit wie möglich zu schonen, sind Mittel vorhanden, welche eine Anfahrkupplung zur Kopplung des ersten Antriebsaggregates in den schlupfenden Zustand bringen, wenn ein vorgegebenes Solldrehmoment des zweiten Antriebsaggregates überschritten ist. Eine solche Gestaltung hat den Vorteil, dass der Beitrag des ersten und des zweiten Antriebsaggregates zum Anfahren des Hybridfahrzeuges genau koordiniert werden kann, indem die Anfahrkupplung in Abhängigkeit von der Leistung des zweiten Antriebsaggregates gesteuert wird. Dabei werden Verschleißerscheinungen der Anfahrkupplung durch mechanischen Abrieb und Temperatureinflüsse weitgehend unterbunden, wodurch sich die Lebensdauer der Kupplung verlängert.

In einer Ausgestaltung ist das zweite Antriebsaggregat im Antriebsstrang der Anfahrkupplung nachgeschaltet und wirkt direkt oder über ein Getriebe auf mindestens ein Antriebsrad des Hybridfahrzeuges. Dadurch ist sichergestellt, dass das zweite Antriebaggregat das Fahrzeug auch allein anfahren kann. Ein weiterer Vorteil besteht darin, dass ein Drehmomentwandler, wie er aus Fahrzeugen mit Automatikgetriebe bekannt ist, nachgebildet werden kann, wodurch komfortable Kriech- und Anfahrvorgänge beispielsweise ein Anfahren am Berg auch ohne das erste Antriebsaggregat ermöglichen. Auf den körperlichen Einsatz eines solchen Drehmomentwandlers kann somit verzichtet werden.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung einer Steuerung eines Anfahrvorgangs bei einem konventionellen Antriebsstrang nach dem Stand der Technik
- Figur 2:: Prinzipdarstellung einer Steuerung eines Anfahrvorganges bei einem hybriden Antriebsstrang gemäß der vorliegenden Erfindung
- Figur 3:: schematisches Ablaufdiagramm eines Ausführungsbeispieles des erfindungsgemäßen Verfahrens

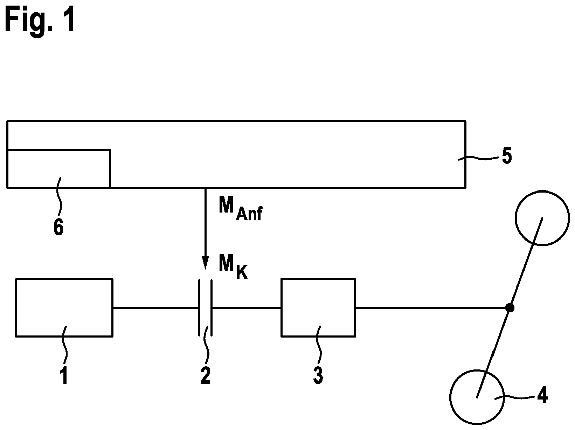

Figur 1 zeigt eine Anordnung zum Anfahren bei einem konventionellen Antriebsstrang nach dem Stand der Technik. Ein Verbrennungsmotor 1 ist dabei mit einer automatisierten Anfahrkupplung 2 verbunden, die wiederum auf ein Getriebe 3 führt, welches das von dem Verbrennungsmotor 1 aufgebrachte Drehmoment auf die Räder 4 überträgt. Die Steuerung des Anfahrvorganges erfolgt dabei über ein Steuergerät 5, welches einen Leerlaufregler 6 für den Verbrennungsmotor 1 aufweist.

Von dem Steuergerät 5 wird anhand einer nicht weiter dargestellten Fahr- und /oder Bremspedalstellung, die vom Fahrer des Hybridfahrzeuges vorgegeben wird bzw. eines Fahrerassistenzsystems ein Anfahrsolldrehmoment M_{Anf} ermittelt und als Sollmoment M_{K} für das von der schlupfenden Anfahrkupplung 2 zu übertragende Drehmoment vorgegeben. Dieses Sollmoment M_{K} wird durch eine entsprechende Anpresskraft an den schleifenden Kupplungsbelägen eingestellt. Der Leerlaufregler 6 verhindert ein Ausgehen des Verbrennungsmotors 1 durch das von der schlupfenden Anfahrkupplung 2 abgenommene Drehmoment. Das Sollmoment M_{K} der Anfahrkupplung 2 wird über das Getriebe 3 an die Räder 4 weitergeleitet.

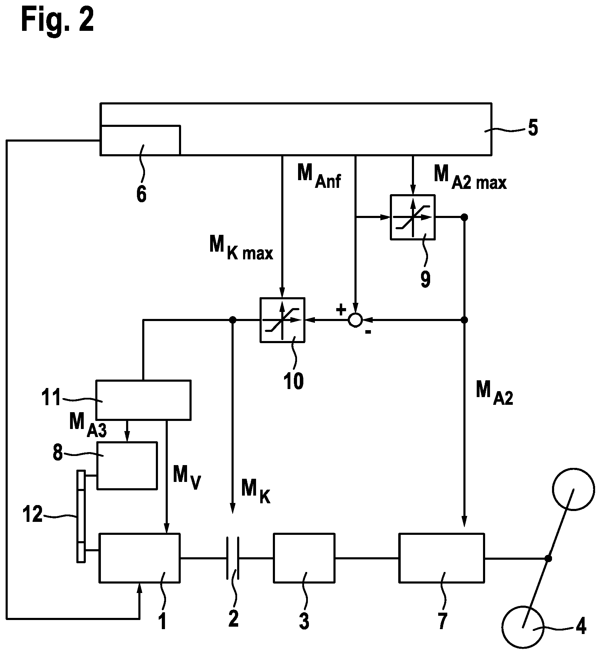

Bei einem Hybridfahrzeug besteht der Antriebsstrang, wie in Figur 2 dargestellt, aus einem Verbrennungsmotor 1, welcher mit der Anfahrkupplung 2 verbunden ist. Die Anfahrkupplung 2 führt auf ein Getriebe 3, an welches sich ein weiteres Antriebsaggregat in Form eines ersten Elektromotors 7 anschließt, das auf die Getriebeausgangswelle wirkt. Das weitere Antriebsaggregat in Form des ersten Elektromotors 7 kann auch zwischen dem Getriebe 3 und der Anfahrkupplung 2 angeordnet werden. Den Abschluss des Antriebstranges bilden die Räder 4. Wenn der erste Elektromotor 7 hinter der Anfahrkupplung 2 angeordnet ist, kann er vorteilhaft direkt und ohne Schlupf auf die Räder 4 einwirken.

Am Riementrieb 12 des Verbrennungsmotors 1 ist ein zweiter Elektromotor oder ein Riemenstartergenerator 8 angebracht. Das Steuergerät 5 wirkt auf einen ersten Begrenzer 9, welcher mit dem ersten Elektromotor 7 verbunden ist. Weiterhin ist das Steuergerät 5 mit einem Kupplungsbegrenzer 10 verbunden, welcher direkt auf die Kupplung 2 und einen Drehmomentenaufteiler 11 einwirkt. Der Drehmomentenaufteiler 11 ist mit dem Verbrennungsmotor 1 und dem zweiten Elektromotor 8 verbunden.

Innerhalb des Steuergerätes 5 ist ein Leerlaufregler 6 für den Verbrennungsmotor 1 enthalten.

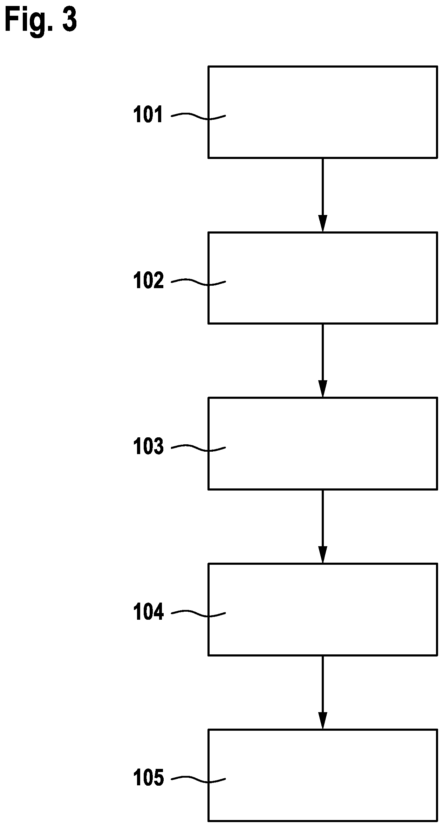

Das erfindungsgemäße Verfahren soll nun anhand von Figur 3 erläutert werden. Im Block 101 befindet sich der Verbrennungsmotor 1 im Leerlauf und die Anfahrkupplung 2 ist geöffnet. Der erste Elektromotor 7 und die Räder 4 stehen. Die Übersetzung des Getriebes 3 wird als i=1 angenommen.

Durch das Steuergerät 5 wird im Block 102 ausgehend von der vom Fahrer des Hybridfahrzeuges vorgegebenen Stellung des Gas- oder Bremspedals oder durch Vorgabe eines Fahrerassistenzsystems ein Anfahrsolldrehmoment M_{Anf} bestimmt, welches vom Verbrennungsmotor 1 und dem ersten Elektromotor 7 sowie dem zweiten Elektromotor 8 gemeinsam erzeugt werden soll.

Im Block 103 wird das gemeinsam zu erzeugende Anfahrsolldrehmoment M_{Anf} zunächst auf den Begrenzer 9 geführt, welchem von dem Steuergerät 5 ein Maximaldrehmoment M_{A2max} vorgegeben wird. Das Maximaldrehmoment M_{A2max} wird dabei von dem Steuergerät 5 in Abhängigkeit des aktuellen Zustandes des ersten Elektromotors 7, des zweiten Elektromotors 8 und des Verbrennungsmotors 1 und einem nicht weiter dargestellten Energiespeicher ermittelt.

Der Begrenzer 9 limitiert das Anfahrsolldrehmoment M_{Anf}, wodurch sich ein Solldrehmoment M_{A2} für den ersten Elektromotor 7 ergibt. Liegt das Anfahrsolldrehmoment M_{Anf} unter dem Maximaldrehmoment M_{A2max} für den ersten Elektromotor 7, dann entspricht das Solldrehmoment M_{A2} dem Anfahrsolldrehmoment M_{Anf} und das Anfahrmoment des Hybridfahrzeuges wird allein von dem ersten Elektromotor 7 aufgebracht.

Liegt das Anfahrsolldrehmoment M_{Anf} über dem Maximaldrehmoment M_{A2max} des ersten Elektromotors 7, dann greift die Begrenzung und der Elektromotor 7 kann lediglich das Maximaldrehmoment M_{A2max} als Solldrehmoment M_{A2} aufbringen.

Im Block 104 wird dann eine Differenz zwischen dem Anfahrsolldrehmoment M_{Anf} und dem auf das Maximaldrehmoment M_{A2max} limitierten Solldrehmoment M_{A2} des ersten Elektromotors 7 berechnet. Diese Differenz ist Null, solange das Anfahrsolldrehmoment M_{Anf} unterhalb des Maximaldrehmomentes M_{A2max} liegt und damit dem limitierten Solldrehmoment M_{A2} entspricht. Die Differenz wird größer Null, wenn das Anfahrsolldrehmoment M_{Anf} das Maximaldrehmoment M_{A2max} überschreitet.

Diese Differenz wird auf den Kupplungsbegrenzer 10 geführt, der von dem Steuergerät 5 ein Kupplungsmaximalmoment M_{Kmax} vorgegeben bekommt. Auch das Kupplungsmaximaldrehmoment M_{Kmax} wird vom Steuergerät 5 bestimmt, indem der aktuelle Betriebszustand der Anfahrkupplung 2 und des Verbrennungsmotors 1 sowie des ersten und des zweiten Elektromotors 7 bzw. 8 und des Energiespeichers 12 berücksichtigt werden. Bleibt das Kupplungsmaximalmoment M_{Kmax} unterschritten, wird die Differenz als das von dem Verbrennungsmotor 1 und dem zweiten Elektromotor 8 gemeinsam gelieferte und der Anfahrkupplung 2 schlupfend zu übertragende Kupplungsmoment M_{K} auf den Antriebsstrang und auf das Getriebe 3 übertragen. Andernfalls entspricht das Kupplungsmoment M_{K} dem Kupplungsmaximalmoment M_{Kmax}.

Im allgemeinen Fall, bei einer Übersetzung des Getriebes 3 von i ≠ 1, muss die Differenz der Übersetzung i entsprechend umgerechnet werden. Die umgerechnete Differenz wird auf den Kupplungsbegrenzer 10 geführt.

Die Anfahrkupplung 2 bleibt vollständig geöffnet, solange die Differenz Null beträgt. Überschreitet das Anfahrsolldrehmoment M_{Anf} das Maximaldrehmoment M_{A2max}, was zu einer positiven Differenz führt, dann gelangt die Anfahrkupplung 2 in den schlupfenden Zustand. Das Anfahrsolldrehmoment M_{Anf} wird dann gemeinsam vom ersten Elektromotor 7 und dem Verbrennungsmotor 1 mitsamt dem zweiten Elektromotor 8 aufgebracht.

In Drehmomentenaufteiler 11 wird das Kupplungsmoment M_{K} auf die Solldrehmomente M_{V} für den Verbrennungsmotor 1 und das Solldrehmoment M_{A3} für den zweiten Elektromotor 8 aufgeteilt (Block 105). Dabei muss das mechanische Übersetzungsverhältnis zwischen dem Verbrennungsmotor 1 und dem zweiten Elektromotor 8 berücksichtigt werden. Diese Vorsteuerung erfolgt, um den Leerlaufregler 6 zu entlasten. Das Anfahren mit einer bevorzugt geöffneten und nur bei Bedarf schlupfenden Anfahrkupplung 2 vermindert den Verschleiß der Anfahrkupplung und ermöglicht eine Verlängerung eines Kriechvorganges. Daneben wird ein Anfahrsolldrehmoment M_{Anf} dargestellt, welches über dem Kupplungmaximaldrehmoment M_{Kmax} liegt, was zu einer Wandlerüberhöhung äquivalent ist.

Der erste Elektromotor 7 und der zweite Elektromotor 8 sind an einen gemeinsamen Energiespeicher angeschlossen, welcher in Figur 2 nicht weiter dargestellt ist. Um den Energiebedarf des ersten Elektromotors 7 zu decken, stellt der zweite Elektromotor 8 elektrische Energie zur Verfügung, welche dem Verbrennungsmotor 1 entnommen wird. In diesem Fall erfolgt ein serieller Betrieb von dem ersten und dem zweiten Elektromotor 7 und 8. Der erste Elektromotor 7 arbeitet dabei motorisch und treibt das Hybridfahrzeug an, während der zweite Elektromotor 8 generatorisch arbeitet und die zum Antrieb durch den ersten Elektromotor 7 notwendige Energie bereitstellt. Dazu muss die für den ersten Elektromotor 7 notwendige Energie im Drehmomentenaufteiler 11 berücksichtigt werden.

In einer Konkretisierung wirken der erste Elektromotor 7 und die von dem Verbrennungsmotor 1 gespeiste Anfahrkupplung 2 auf unterschiedliche Antriebsräder oder - achsen. So kann die Anfahrkupplung 2 über ein Getriebe auf die Hinterachse des Hybridfahrzeuges wirken, während der erste Elektromotor 7 die Vorderachse antreibt. In diesem Fall werden das von den Betriebszuständen der Antriebsaggregate 1, 2, 7, 8 abhängende Kupplungsmaximalmoment M_{Kmax} und das Maximaldrehmoment M_{A2max} des ersten Elektromotors 7 zusätzlich von einem Antischlupfregelsystem beeinflusst. Das Maximaldrehmoment M_{A2max} des ersten Elektromotors 7 ist dabei auch durch einen Kraftschluss mit dem Boden limitiert. Dabei wird das Durchdrehen einzelner Antriebsachsen oder Antriebsräder bei kleinen Reibwerten z.B. infolge von Glatteis vermieden, indem das Anfahrmoment teilweise auf die von dem Verbrennungsmotor 1 und die Anfahrkupplung 2 angetriebene Achse aufgebracht wird.

Bei einigen Verbrennungsmotoren ist eine Erhöhung des Istdrehmomentes des Verbrennungsmotors nur mit einer zeitlichen Verzögerung möglich, z.B. bei homogener Verbrennung infolge des verzögerten Aufbaus der Luftfüllung auf Grund der Saugrohrdynamik. Hierbei treten Verzögerungen im Bereich von 100 bis 300 Millisekunden auf. Das Kupplungsmoment M_{K} wird am Verbrennungsmotor 1 abgenommen und darf nur in dem Maße ansteigen, wie das Istdrehmoment des Verbrennungsmotors 1 und das Istdrehmoment des zweiten Elektromotors 8 erhöht werden können. Dazu wird die Limitierung des Kupplungsmomentes M_{K} durch das Kupplungsmaximalmoment M_{Kmax} genutzt, welche mit der Erhöhung des Istdrehmomentes koordiniert ist.

Um einen schnelleren Aufbau des Istdrehmomentes des Verbrennungsmotors 1 zu erreichen, wird eine Drehmomentreserve am Verbrennungsmotor 1 aufgebaut. Dies erfolgt zum Beispiel durch eine Erhöhung der Luftfüllung mit gleichzeitiger Spätverstellung des Zündwinkels. Aus diesem Zustand heraus kann der Zündwinkel bei Bedarf nahezu verzögerungsfrei in Richtung früh verstellt werden, was mit einer nahezu verzögerungsfreien Erhöhung des Istdrehmomentes des Verbrennungsmotors 1 verbunden ist. Die Drehmomentreserve am Verbrennungsmotor 1 wird angefordert, wenn sich das Anfahrsolldrehmoment M_{Anf} erhöht, aber das Maximaldrehmoment M_{A2max} des ersten Elektromotors 7 noch nicht überschritten hat. Diese Reserveanforderung erfolgt, wenn sich das Anfahrsolldrehmoment M_{Anf} dem Maximaldrehmoment M_{A2max} von unten bis auf einem vorgegebenen Abstand, wie beispielsweise 30 Nm angenähert hat. Der Abstand wird dabei in Abhängigkeit der Geschwindigkeit der Betätigung des Fahrpedals durch den Fahrer und/oder in Abhängigkeit einer Änderungsgeschwindigkeit des Anfahrsolldrehmomentes M_{Anf} bestimmt. Eine rechtzeitige Anforderung der Drehmomentreserve erfolgt, wenn der Abstand bei schneller Betätigung des Fahrpedals erhöht wird.

Das Anfahren des Hybridfahrzeuges kann dabei aber zunächst auch bei geöffneter Anfahrkupplung 2 durch den ersten Elektromotor 7 erfolgen, wobei der Verbrennungsmotor 1 abgeschaltet ist. Nach der Anforderung eines Starts des Verbrennungsmotors 1 vergehen ca. 300 bis 500 Millisekunden bis ein Istdrehmoment des Verbrennungsmotors 1 zur Verfügung steht. Ein Start des Verbrennungsmotors 1 wird dabei angefordert, wenn sich das Anfahrsolldrehmoment M_{Anf} erhöht, aber das Maximaldrehmoment M_{A2max} des ersten Elektromotors 7 noch nicht überschritten hat. So wird beispielsweise ein Start angefordert, wenn sich das Anfahrsolldrehmoment M_{Anf} dem Maximaldrehmoment M_{A2max} von unten bis auf einem vorgegebenen Abstand, wie beispielsweise 50 Nm angenähert hat. Auch hier wird der Abstand durch die Geschwindigkeit der Betätigung des Fahrpedals durch den Fahrer und/oder in Abhängigkeit einer Änderungsgeschwindigkeit des Anfahrsolldrehmomentes M_{Anf} bestimmt.

Dabei kann es vorkommen, dass der Verbrennungsmotor 1 nicht schnell genug startet. D.h. das angeforderte Anfahrsolldrehmoment M_{Anf} kann temporär nicht erzeugt werden, bis der Verbrennungsmotor 1 gestartet ist und ein Istdrehmoment zur Verfügung steht. In diesem Fall ist es günstig, das Istdrehmoment des Verbrennungsmotors 1 sowie das Kupplungsmoment M_{K} nach erfolgtem Start nicht sprungförmig, sondern rampenförmig aufzubauen bzw. in den Antrieb einzuleiten. Damit wird eine plötzliche, für den Fahrer nicht nachvollziehbare Beschleunigung des Fahrzeuges vermieden.

## Patentansprüche

1. Verfahren zum Anfahren eines Hybridfahrzeuges, welches ein erstes (1) und ein zweites Antriebsaggregat (7) aufweist, wobei das erste Antriebsaggregat (1) als Verbrennungsmotor und das zweite Antriebsaggregat (7) als Elektromotor ausgebildet ist und ein Anfahrsolldrehmoment (M_{Anf}) von dem zweiten Antriebsaggregat (7) erzeugt wird, wobei ein Anfahrsolldrehmoment (M_{Anf}) des Hybridfahrzeuges auf das zweite Antriebsaggregat (7) übertragen wird, dessen Solldrehmoment (M_{A2}) auf ein Maximaldrehmoment (M_{A2max}) begrenzt wird, wobei eine Anfahrkupplung (2) zur Kopplung des ersten Antriebsaggregates (1) in den schlupfenden Zustand gebracht wird, wenn ein vorgegebenes Solldrehmoment (M_{A2}) des zweiten Antriebsaggregates (7) überschritten wird **dadurch gekennzeichnet, dass** eine Drehmomentenreserve am ersten Antriebsaggregat (1) angefordert wird, wenn sich das Anfahrsolldrehmoment M_{Anf} erhöht, aber bevor das Anfahrsolldrehmoment M_{Anf} das Maximaldrehmoment M_{A2max} überschreitet.

2. Verfahren nach Anspruch 1 **dadurch gekennzeichnet, dass** das Maximaldrehmoment (M_{A2max}) des zweiten Antriebsaggregates (7) von den aktuellen Betriebszuständen der Aggregate (1, 2, 7, 8) des Antriebsstranges des Hybridfahrzeuges und/oder eines Energiespeichers (12) und/oder den Straßenverhältnissen abhängt.

3. Verfahren nach Anspruch 1 **dadurch gekennzeichnet, dass** ein von der schlupfenden Anfahrkupplung (2) zu übertragendes Kupplungsdrehmoment (M_{K}) aus der Differenz des Anfahrsolldrehmomentes (M_{Anf}) des Hybridfahrzeuges und des durch das Maximaldrehmoment (M_{A2max}) limitierten Solldrehmomentes (M_{A2}) des zweiten Antriebsaggregates (7) gebildet wird.

4. Verfahren nach Anspruch 3, **dadurch gekennzeichnet, dass** das Kupplungsdrehmoment (M_{K}) in Abhängigkeit des aktuellen Betriebszustandes der Anfahrkupplung (2) und /oder des ersten Antriebsaggregates (1) und/oder eines dritten Antriebsaggregates (8) und/oder von den Straßenverhältnissen auf ein Kupplungsmaximaldrehmoment (M_{Kmax}) begrenzt wird.

5. Verfahren nach Anspruch 3 oder 4, **dadurch gekennzeichnet, dass** zur Einstellung
einer Drehmomenterhöhung das Anfahrsolldrehmoment (M_{Anf}) über dem Kupplungsmaximaldrehmoment (M_{Kmax}) liegt.

6. Verfahren nach einem der vorhergehenden Ansprüche **dadurch gekennzeichnet, dass** ein drittes Antriebsaggregat (8) mit dem ersten Antriebsaggregat (1) gekoppelt ist und von diesem angetrieben wird, um Energie zu erzeugen, welche das zweite Antriebsaggregat (7) nutzt.

7. Verfahren nach Anspruch 5 und 6, **dadurch gekennzeichnet, dass** das Kupplungsdrehmoment (M_{K}) auf das erste (1) und das dritte Antriebsaggregat (8) aufgeteilt wird.

8. Verfahren nach einem der Ansprüche 6 bis 8 **dadurch gekennzeichnet,**
**dass** bei Erreichen einer Drehzahlgleichheit von Eingangsdrehzahl und Ausgangsdrehzahl der Anfahrkupplung (2) die Drehmomente (M_{V}, M_{A2}, M_{A3}) des ersten (1), des zweiten Antriebaggregates (7) und des dritten Antriebsaggregates (8) sprungfrei dem Fahrbetrieb angepasst werden.

9. Verfahren nach einem der vorhergehenden Ansprüche **dadurch gekennzeichnet, dass** das dritte Antriebsaggregat (8) als ein Elektromotor ausgebildet ist.

10. Verfahren nach Anspruch 1 **dadurch gekennzeichnet, dass** ein Anfahren durch das zweite Antriebsaggregat (7) bei geöffneter Anfahrkupplung (2) erfolgt, während das erste Antriebsaggregat (1) abgeschaltet ist.

11. Verfahren nach Anspruch 10 **dadurch gekennzeichnet, dass** ein Start des ersten
Antriebsaggregates (1) erfolgt, wenn sich das Anfahrsolldrehmoment M_{Anf} erhöht, aber bevor das Anfahrsolldrehmoment M_{Anf} das Maximaldrehmoment M_{A2max} überschreitet.

12. Verfahren nach Anspruch 1 oder 11 **dadurch gekennzeichnet, dass** ein Abstand
des Anfahrsolldrehmoments M_{Anf} zum Maximaldrehmoment M_{A2max} in Abhängigkeit einer Betätigungsgeschwindigkeit eines Fahrpedals und/oder in Abhängigkeit einer Änderungsgeschwindigkeit des Anfahrsolldrehmomentes (M_{Anf}) bestimmt wird.

13. Vorrichtung zum Anfahren eines Hybridfahrzeuges, welches ein erstes (1) und ein zweites Antriebsaggregat (7) aufweist, wobei das erste Antriebsaggregat (1) als Verbrennungsmotor und das zweite Antriebsaggregat (7) als Elektromotor ausgebildet ist und das Anfahrsolldrehmoment (M_{Anf}) von dem zweiten Antriebsaggregat (7) erzeugt wird, wobei Mittel (5) vorhanden sind, über welche ein Anfahrsolldrehmoment (M_{Anf}) des Hybridfahrzeuges auf das zweite Antriebsaggregat (7) übertragen wird, dessen Solldrehmoment (M_{A2}) auf ein Maximaldrehmoment (M_{A2max}) begrenzt wird, und die eine Anfahrkupplung (2) zur Kopplung des ersten Antriebsaggregates (1) in den schlupfenden Zustand bringen, wenn ein vorgegebenes Solldrehmoment (M_{A2}) des zweiten Antriebsaggregates (7) überschritten wird **dadurch gekennzeichnet, dass** die Mittel (5) eine Drehmomentenreserve am ersten Antriebsaggregat (1) anfordern, wenn sich das Anfahrsolldrehmoment M_{Anf} erhöht, aber bevor das Anfahrsolldrehmoment M_{Anf} das Maximaldrehmoment M_{A2max} überschreitet..

14. Vorrichtung nach Anspruch 13 **dadurch gekennzeichnet, dass** das zweite
Antriebsaggregat (7) im Antriebsstrang der Anfahrkupplung (2) nachgeschaltet ist und direkt oder über ein Getriebe (3) auf ein Antriebsrad (4) des Hybridfahrzeuges wirkt.

## Claims

1. Method for starting a hybrid vehicle which has a first (1) and a second drive unit (7), the first drive unit (1) being configured as an internal combustion engine and the second drive unit (7) being configured as an electric motor, and a setpoint starting torque (M_{Anf}) being generated by the second drive unit (7), a setpoint starting torque (M_{Anf}) of the hybrid vehicle being transmitted to the second drive unit (7), the setpoint torque (M_{A2}) of which is limited to a maximum torque (M_{A2max}), a start-up clutch (2) for coupling the first drive unit (1) being moved into the slipping state if a predefined setpoint torque (M_{A2}) of the second drive unit (7) is exceeded, **characterized in that** a torque reserve is requested at the first drive unit (1) when the setpoint starting torque M_{Anf} is increased but before the setpoint starting torque M_{Anf} exceeds the maximum torque M_{A2max}.

2. Method according to Claim 1, **characterized in that** the maximum torque (M_{A2max}) of the second drive unit (7) is dependent on the current operating states of the units (1, 2, 7, 8) of the drive train of the hybrid vehicle and/or of an energy store (12) and/or the road conditions.

3. Method according to Claim 1, **characterized in that** a clutch torque (M_{K}) which is to be transmitted by the slipping start-up clutch (2) is formed from the difference of the setpoint starting torque (M_{Anf}) of the hybrid vehicle and the setpoint torque (M_{A2}) of the second drive unit (7), which setpoint torque (M_{A2}) is limited by the maximum torque (M_{A2max}).

4. Method according to Claim 3, **characterized in that** the clutch torque (M_{K}) is limited to a maximum clutch torque (M_{Kmax}) in a manner which is dependent on the current operating state of the start-up clutch (2) and/or of the first drive unit (1) and/or of a third drive unit (8) and/or on the road conditions.

5. Method according to Claim 3 or 4, **characterized in that** the setpoint starting torque (M_{Anf}) lies above the maximum clutch torque (M_{Kmax}) in order to set a torque increase.

6. Method according to one of the preceding claims, **characterized in that** a third drive unit (8) is coupled to the first drive unit (1) and is driven by the latter, in order to generate energy which is utilized by the second drive unit (7).

7. Method according to Claims 5 and 6, **characterized in that** the clutch torque (M_{K}) is divided among the first (1) and the third drive unit (8).

8. Method according to one of Claims 6 to 8, **characterized in that**, when a rotational speed uniformity is reached of the input rotational speed and the output rotational speed of the start-up clutch (2), the torques (M_{V}, M_{A2}, M_{A3}) of the first (1), the second drive unit (7) and the third drive unit (8) are adapted to the driving operation in a jump-free manner.

9. Method according to one of the preceding claims, **characterized in that** the third drive unit (8) is configured as an electric motor.

10. Method according to Claim 1, **characterized in that** starting takes place by way of the second drive unit (7) when the start-up clutch (2) is open, whereas the first drive unit (1) is switched off.

11. Method according to Claim 10, **characterized in that** starting of the first drive unit (1) takes place when the setpoint starting torque M_{Anf} is increased but before the setpoint starting torque M_{Anf} exceeds the maximum torque M_{A2max}.

12. Method according to Claim 1 or 11, **characterized in that** a gap of the setpoint starting torque M_{Anf} from the maximum torque M_{A2max} is determined in a manner which is dependent on an actuating speed of an accelerator pedal and/or in a manner which is dependent on a change speed of the setpoint starting torque (M_{Anf}).

13. Apparatus for starting a hybrid vehicle which has a first (1) and a second drive unit (7), the first drive unit (1) being configured as an internal combustion engine and the second drive unit (7) being configured as an electric motor, and the setpoint starting torque (M_{Anf}) being generated by the second drive unit (7), there being means (5), via which a setpoint starting torque (M_{Anf}) of the hybrid vehicle is transmitted to the second drive unit (7), the setpoint torque (M_{A2}) of which is limited to a maximum torque (M_{A2max}), and which bring a start-up clutch (2) for coupling the first drive unit (1) into the slipping state when a predefined setpoint torque (M_{A2}) of the second drive unit (7) is exceeded, **characterized in that** the said means (5) request a torque reserve at the first drive unit (1) when the setpoint starting torque M_{Anf} is increased but before the setpoint starting torque M_{Anf} exceeds the maximum torque M_{A2max}.

14. Apparatus according to Claim 13, **characterized in that** the second drive unit (7) is connected downstream of the start-up clutch (2) in the drive train and acts directly or via a transmission (3) on a drive wheel (4) of the hybrid vehicle.

## Revendications

1. Procédé pour le démarrage d'un véhicule hybride, qui présente un premier groupe d'entraînement (1) et un deuxième groupe d'entraînement (7), le premier groupe d'entraînement (1) étant réalisé sous forme de moteur à combustion interne et le deuxième groupe d'entraînement (7) sous forme de moteur électrique, et un couple de consigne de démarrage (M_{Anf}) étant généré par le deuxième groupe d'entraînement (7), un couple de consigne de démarrage (M_{Anf}) du véhicule hybride étant transmis au deuxième groupe d'entraînement (7), son couple de consigne (M_{A2}) étant limité à un couple maximal (M_{A2max}), un embrayage de démarrage (2) étant amené à l'état de glissement pour l'accouplement du premier groupe d'entraînement (1) si un couple de consigne prédéfini (M_{A2}) du deuxième groupe d'entraînement (7) est dépassé, **caractérisé en ce qu'**une réserve de couple au niveau du premier groupe d'entraînement (1) est demandée si le couple de consigne de démarrage M_{Anf} augmente, mais avant que le couple de consigne de démarrage M_{Anf} ne dépasse le couple maximal M_{A2max}.

2. Procédé selon la revendication 1, **caractérisé en ce que** le couple maximal (M_{A2max}) du deuxième groupe d'entraînement (7) dépend de l'état de fonctionnement actuel des groupes (1, 2, 7, 8) de la chaîne cinématique du véhicule hybride et/ou d'un accumulateur d'énergie (12) et/ou des conditions routières.

3. Procédé selon la revendication 1, **caractérisé en ce qu'**un couple d'embrayage (M_{K}) devant être transmis par l'embrayage de démarrage glissant (2) est formé par la différence du couple de consigne de démarrage (M_{Anf}) du véhicule hybride et le couple de consigne (M_{A2}) limité par le couple maximal (M_{A2max}) du deuxième groupe d'entraînement (7).

4. Procédé selon la revendication 3, **caractérisé en ce que** le couple d'embrayage (M_{K}) est limité à un couple maximal d'embrayage (M_{Kmax}) en fonction de l'état de fonctionnement actuel de l'embrayage de démarrage (2) et/ou du premier groupe d'entraînement (1) et/ou d'un troisième groupe d'entraînement (8) et/ou des conditions routières.

5. Procédé selon la revendication 3 ou 4, **caractérisé en ce que** pour l'ajustement d'une augmentation de couple, le couple de consigne de démarrage (M_{Anf}) est situé au-dessus du couple maximal d'embrayage (M_{Kmax}).

6. Procédé selon l'une quelconque des revendications précédentes, **caractérisé en ce qu'**un troisième groupe d'entraînement (8) est accouplé au premier groupe d'entraînement (1) et est entraîné par celui-ci afin de générer de l'énergie qui est utilisée par le deuxième groupe d'entraînement (7).

7. Procédé selon les revendications 5 et 6, **caractérisé en ce que** le couple d'embrayage (M_{K}) est divisé en le premier (1) et le troisième (8) groupe d'entraînement.

8. Procédé selon l'une quelconque des revendications 6 à 8, **caractérisé en ce que** lorsqu'une égalité de vitesse de rotation entre la vitesse de rotation d'entrée et la vitesse de rotation de sortie de l'embrayage de démarrage (2) est atteinte, les couples (M_{V}, M_{A2}, M_{A3}) du premier (1), du deuxième (7) et du troisième (8) groupe d'entraînement sont adaptés sans saut au mode de conduite.

9. Procédé selon l'une quelconque des revendications précédentes, **caractérisé en ce que** le troisième groupe d'entraînement (8) est réalisé sous forme de moteur électrique.

10. Procédé selon la revendication 1, **caractérisé en ce qu'**un démarrage s'effectue par le biais du deuxième groupe d'entraînement (7) lorsque l'embrayage de démarrage (2) est ouvert, tandis que le premier groupe d'entraînement (1) est coupé.

11. Procédé selon la revendication 10, **caractérisé en ce qu'**un démarrage du premier groupe d'entraînement (1) a lieu lorsque le couple de consigne de démarrage M_{Anf} est augmenté, mais avant que le couple de consigne de démarrage M_{Anf} ne dépasse le couple maximal M_{A2max}.

12. Procédé selon la revendication 1 ou 11, **caractérisé en ce qu'**un écart entre le couple de consigne de démarrage M_{Anf} et le couple maximal M_{A2max} est déterminé en fonction d'une vitesse d'actionnement d'une pédale d'accélérateur et/ou en fonction d'une vitesse de variation du couple de consigne de démarrage (M_{Anf}).

13. Dispositif pour le démarrage d'un véhicule hybride, qui présente un premier (1) et un deuxième (7) groupe d'entraînement, le premier groupe d'entraînement (1) étant réalisé sous forme de moteur à combustion interne et le deuxième groupe d'entraînement (7) étant réalisé sous forme de moteur électrique et le couple de consigne de démarrage (M_{Anf}) étant généré par le deuxième groupe d'entraînement (7), des moyens (5) étant prévus, par le biais desquels est transmis un couple de consigne de démarrage (M_{Anf}) du véhicule hybride au deuxième groupe d'entraînement (7), dont le couple de consigne (M_{A2}) est limité à un couple maximal (M_{A2max}), et qui amènent à l'état glissant un embrayage de démarrage (2) pour l'accouplement du premier groupe d'entraînement (1), si un couple de consigne prédéfini (M_{A2}) du deuxième groupe d'entraînement (7) est dépassé, **caractérisé en ce que** les moyens (5) demandent une réserve de couple au niveau du premier groupe d'entraînement (1) si le couple de consigne de démarrage M_{Anf} est augmenté mais avant que le couple de consigne de démarrage M_{Anf} ne dépasse le couple maximal M_{A2max}.

14. Dispositif selon la revendication 13, **caractérisé en ce que** le deuxième groupe d'entraînement (7) est monté après l'embrayage de démarrage (2) dans la chaîne cinématique et agit directement ou par le biais d'une transmission (3) sur une roue motrice (4) du véhicule hybride.
